# EUROPEAN PATENT APPLICATION

(11) **EP 4 641 274 A1**
(43) Date of publication of application: **29.10.2025**
(21) Application number: 25172103.1
(22) Date of filing: 24.04.2025
(51) Int. Cl.: G02B 6/42

(54) **OPTICAL ENGINE SOCKET WITH INTEGRATED OPTICAL RECEPTACLE**

(30) Priority: 24.04.2024 US 202418644783
(71) Applicant: Cisco Technology, Inc., San Jose, CA 95134-1706 (US)
(72) Inventor: Schlepple, Norbert, San Jose, 95134-1706 (US); Patel, Vipulkumar K., San Jose, 95134-1706 (US)
(74) Representative: Noble, Nicholas

(57) **Abstract**

Aspects described herein include an apparatus including a socket. The socket includes an array of conductive connections, a frame at least partly circumscribing the array of conductive connections, and a sidewall having an optical receptacle extending therethrough. The optical receptacle is configured to receive an optical connector. The apparatus further includes an optical engine received in the frame into a seated configuration where a photonic integrated circuit of the optical engine is electrically coupled with the array of conductive connections, and is optically coupled with one or more optical fibers of the optical connector.

## Description

### TECHNICAL FIELD

Embodiments presented in this disclosure generally relate to co-packaged optics (CPO) applications, and more specifically, to implementations of a socket for an optical engine (OE) of a CPO application.

### BACKGROUND

As communication speeds continue to increase in optical transceivers and other devices, it becomes more challenging to carry electrical signals over printed circuit board (PCB) traces. Flyover cables (e.g., twinaxial cables) may be used in some cases to overcome certain limitations of PCB traces, but integrating the cabling into packaging presents different challenges, especially when scaling to higher component densities and/or communication speeds.

Co-packaged optics (CPO) applications are highly desirable solutions when scaling to higher densities and speeds, but the reliability and serviceability of CPO applications can be challenging due to the requirement of connecting numerous optical fibers to photonic integrated circuit(s) (IC(s)) included in an optical engine (OE). A connectorized attachment of the optical fibers to the photonic ICs provides a number of benefits: the cost of the optical fibers is decoupled from the cost of the OE, the implementations of different fiber lengths and configurations are simplified, and the implementations of the OE may be standardized. Further, as use of the connectorized attachment may support implementations of the OE having less polymer or plastic material, the OE may be more resilient to support a solder reflow process (e.g., used in surface mount technology).

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figure 1 is a partially-exploded perspective view of an opto-electronic apparatus, according to one or more embodiments.
Figure 2A is a schematic cross-sectional view of an optical apparatus, according to one or more embodiments.
Figure 2B is a schematic top view of the optical apparatus of Figure 2A, according to one or more embodiments.
Figure 3 is a schematic cross-sectional view of a portion of an alternate configuration of the optical apparatus having a deflection mirror integrated into an optical lens array, according to one or more embodiments.
Figure 4 is a schematic cross-sectional view of a portion of an alternate configuration of the optical apparatus having a fixed ferrule in an optical connector, according to one or more embodiments.
Figure 5 is a schematic cross-sectional view of a portion of an alternate configuration of the optical apparatus having a plurality of optical fibers arranged in a plurality of rows within a ferrule, according to one or more embodiments.
Figure 6 is a schematic top view of a portion of an alternate configuration of the optical apparatus having a plurality of optical receptacles, according to one or more embodiments.
Figure 7 is a schematic cross-sectional view of an optical engine (OE) having coarse alignment features and fine alignment features for aligning an optical connector with a photonic IC of the OE, according to one or more embodiments.
Figure 8 is a flow diagram for a method of fabricating an optical apparatus, according to one or more embodiments.
Figure 9A-9D illustrate an exemplary sequence for fabricating an optical apparatus, according to one or more embodiments.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

Generally, optical systems for CPO applications are provided in this disclosure.

One embodiment presented in this disclosure is an apparatus including a socket. The socket includes an array of conductive connections, a frame at least partly circumscribing the array of conductive connections, and a sidewall having an optical receptacle extending therethrough. The optical receptacle is configured to receive an optical connector. The apparatus further includes an optical engine received in the frame into a seated configuration where a photonic integrated circuit of the optical engine is electrically coupled with the array of conductive connections, and is optically coupled with one or more optical fibers of the optical connector.

One embodiment presented in this disclosure is a socket for an optical engine. The socket includes an array of conductive connections, and a frame portion at least partly circumscribing the array of conductive connections. The frame portion is configured to receive the optical engine into a seated configuration in which a photonic integrated circuit of the optical engine is electrically coupled with the array of conductive connections. The socket further includes a wall portion extending in a first direction from the frame portion, the wall portion having an opening extending therethrough. The opening defines a mechanical reference plane with a predefined disposition relative to an optical reference plane of the optical engine, such that receiving an optical connector into the opening aligns an optical fiber of the optical connector with the photonic integrated circuit.

One embodiment presented in this disclosure is a method of fabricating an optical apparatus. The method includes disposing a socket on a substrate, and disposing an optical engine in a frame of the socket into a seated configuration where a photonic integrated circuit of the optical engine is electrically coupled with an array of conductive connections of the socket. The method further includes inserting an optical connector in an opening formed in a sidewall of the socket, wherein an optical fiber of the optical connector is optically coupled with the photonic integrated circuit.

### EXAMPLE EMBODIMENTS

Embodiments described herein include a hybrid socket for an OE, which provides electrical interconnections through the socket (e.g., through a base of the socket defining a bottom plane of the socket), as well as optical interconnections using optical receptacle(s) that are formed through a sidewall of the socket. In some embodiments, the socket comprises a frame that at least partly circumscribes the electrical interconnections. The frame generally provides mechanical alignment for the OE during the seating process.

In some embodiments, the frame and the sidewall are formed by a precision molding process using a suitable material, such as a glass-filled liquid crystal polymer (LCP) resin material. Beneficially, using a same molding process and same material improves the dimensional accuracy of the socket as well as the thermal stability of the socket during operation of the OE. As the optical receptacle(s) are also formed with a high dimensional accuracy, the optical receptacle(s) can define a mechanical reference plane of the socket. Seating the OE in the frame operates to cause a photonic integrated circuit (IC) of the OE to be electrically coupled with conductive connections of the frame. Seating the OE in the frame also operates to provide a predefined disposition of an optical reference plane of the OE relative to the mechanical reference plane. In this way, receiving an optical connector into the optical receptacle operates to align optical fiber(s) of the optical connector with optical waveguide(s) or other optical components of the photonic IC.

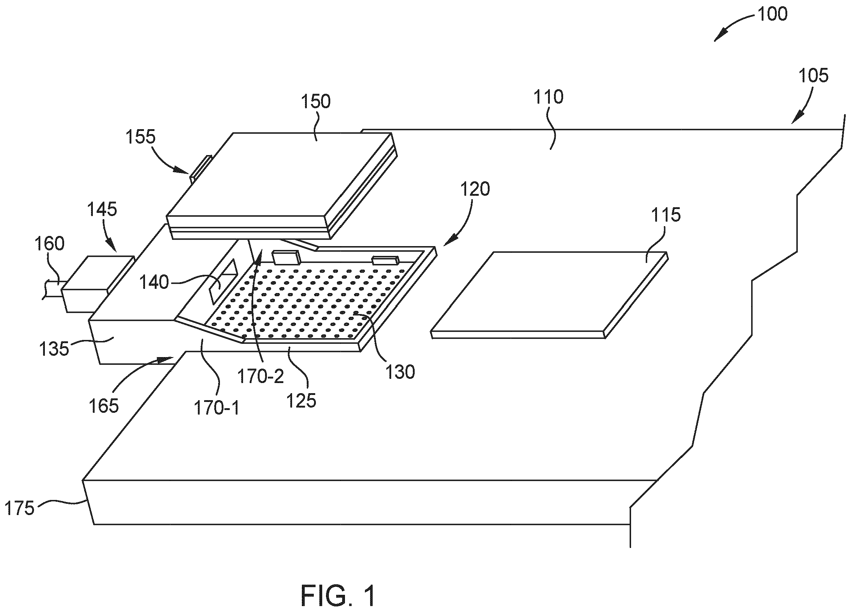

Figure 1 is a partially-exploded perspective view of an opto-electronic apparatus 100 (also referred to as "apparatus 100"), according to one or more embodiments. The features depicted in Figure 1 may be used in conjunction with other embodiments described herein.

The apparatus 100 comprises a substrate 105 defining a top surface 110 and a side surface 175. In some embodiments, the substrate 105 defines a plurality of planar surfaces, such that each of the top surface 110 and the side surface 175 are planar. However, the substrate 105 may have any alternate contouring that is suitable for positioning a socket 120 to contact the top surface 110 and/or the side surface 175. In some embodiments, the substrate 105 comprises a printed circuit board (PCB) including conductive connections at the top surface 110 (e.g., conductive traces) and electronic and/or conductive components formed at one or more layers beneath the top surface 110, with one or more conductive vias extending between the conductive connections at the top surface 110 and/or the electronic and/or conductive components formed at the layer(s).

The substrate 105 may support a number of electronic components at the top surface 110. As shown, an integrated circuit (IC) 115 is disposed on the top surface. The IC 115 may have any suitable form factor and functionality. The IC 115 is connected to the conductive connections at the top surface 110 using any suitable techniques, for example, through surface mount connectors.

The apparatus 100 further comprises the socket 120 that receives an optical engine (OE) 150 into a seated configuration. The OE 150 typically comprises a photonic IC. In some embodiments, the socket 120 comprises a frame 125 (also referred to as a frame portion 125) and a sidewall 135 (also referred to as a wall portion 135). The frame 125 comprises a base and one or more sidewalls extending up from the base. In some embodiments, the base defines a bottom plane of the frame 125, and the one or more sidewalls define a perimeter (or a lateral extent) of the frame 125.

The one or more sidewalls may form a continuous perimeter of the frame 125, or may include one or more discontinuities (e.g., one or more gaps within a particular sidewall, between adjacent sidewalls, and so forth). As shown, the frame 125 has a substantially rectangular shape, although other contouring of the frame 125 is also contemplated. In some embodiments, the sidewall 135 defines one or more sidewalls of the frame 125. In other embodiments, the sidewall 135 is distinct from the frame 125 and has a predefined arrangement relative to a sidewall of the frame 125.

The socket 120 may be formed using any suitable materials. In some embodiments, the frame 125 and the sidewall 135 are each formed of a glass-filled liquid crystal polymer (LCP) resin material. In some embodiments, the frame 125 and the sidewall 135 are integrally formed. For example, the frame 125 and the sidewall 135 may be formed using a same precision molding process. In other embodiments, the frame 125 and the sidewall 135 may be separately formed and attached together using any suitable techniques.

The socket 120 further comprises an array of conductive connections 130 that are at least partly circumscribed by the sidewall(s) of the frame 125. In some embodiments, the frame 125 fully circumscribes the array of conductive connections 130. In other embodiments, the frame 125 partly circumscribes the array of conductive connections 130, e.g., The array of conductive connections 130 extend through the base of the frame 125 (e.g., through a bottom plane of the frame 125) and may have any suitable implementation, such as metal leads or conductive polymer pins. For example, the array of conductive connections 130 may be implemented as land grid array (LGA) pins. When the socket 120 is disposed on the substrate 105, the array of conductive connections 130 are electrically coupled with the conductive connections at the top surface 110. When the OE 150 is disposed in the seated configuration in the socket 120, the OE 150 is electrically coupled with the array of conductive connections 130. Thus, the OE 150 may be electrically coupled, through the conductive connections at the top surface 110, with various electronic component(s) that are disposed on the substrate 105 (such as the IC 115).

When the socket 120 is disposed on the substrate 105, the frame 125 (and more specifically, the base of the frame 125) is disposed on the top surface 110. In some embodiments, the sidewall 135 overhangs the substrate 105 (that is, the sidewall 135 extends outward beyond the side surface 175). In other embodiments, the sidewall 135 may be disposed on the top surface 110.

In some embodiments, a first portion of the sidewall 135 extends in a first direction from the frame 125. For example, the frame 125 may be substantially horizontal, and the first portion of the sidewall 135 extends in an orthogonal direction (e.g., a vertically upward direction). In some embodiments, where the sidewall 135 overhangs the substrate 105, a second portion of the sidewall 135 extends in a second direction opposite the first direction (e.g., a vertically downward direction). In some embodiments, the second portion of the sidewall 135 forms a stop 165, such that disposing the socket 120 on the substrate 105 comprises contacting the stop 165 with the side surface 175 of the substrate 105. In some cases, contacting the stop 165 with the side surface 175 controls the position of the socket 120 along one dimension relative to the substrate 105.

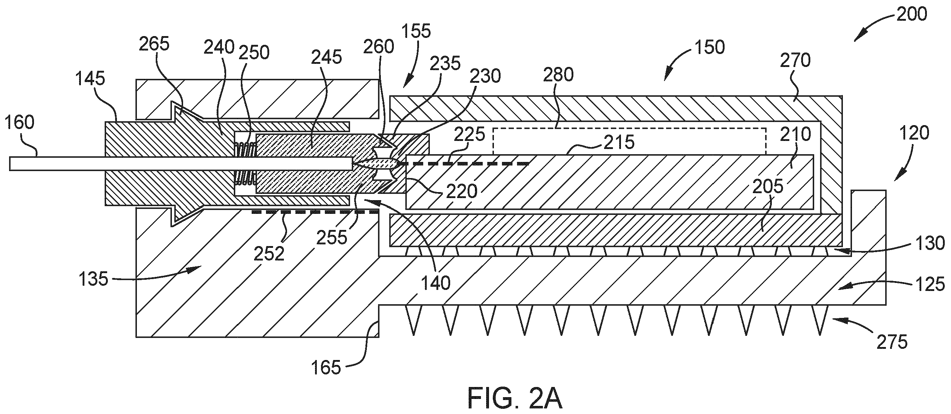

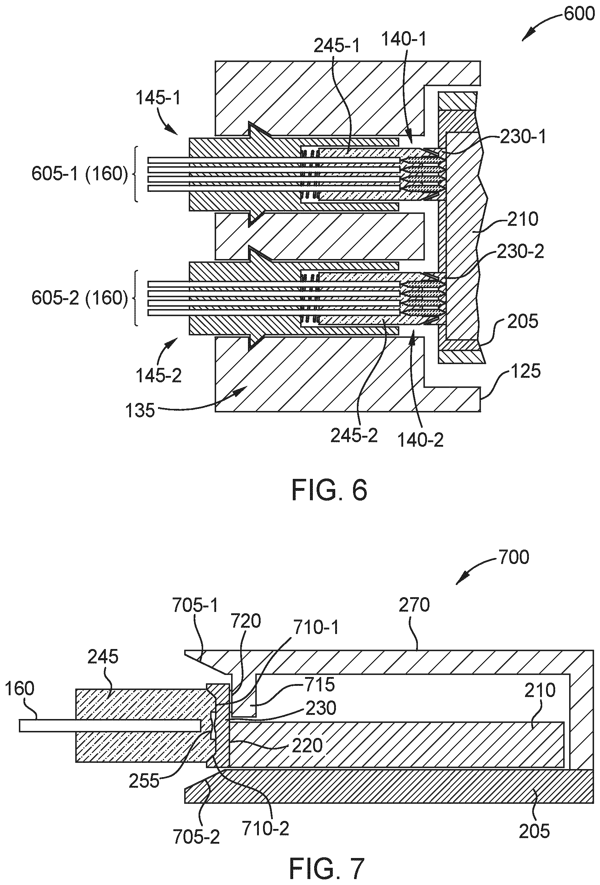

An opening extends through the sidewall 135 and serves as an optical receptacle 140 of the socket 120. The optical receptacle 140 has any suitable dimensioning for receiving an optical connector 145. In some embodiments, the optical receptacle 140 includes one or more alignment features, such as chamfers, that guide the optical connector 145 during the connection or coupling process. In some embodiments, the optical connector 145 may include one or more alignment features (e.g., complementary angle chamfers) on a leading edge of the optical connector 145 that contact the alignment feature(s) of the optical receptacle 140. Some non-limiting examples of the alignment feature(s) of the optical connector 145 include one or more alignment features 260 (discussed with respect to Figure 2A ff), and fine alignment features 710-1, 710-2 (discussed with respect to Figure 7).

In some embodiments, the optical receptacle 140 may include one or more retaining features that retain the optical connector 145 in the connected configuration. In some embodiments, the sidewall 135 comprises a plurality of optical receptacles 140 for receiving a plurality of optical connectors 145.

When the OE 150 is in the seated configuration in the socket 120, and an optical connector 145 is received into the optical receptacle 140, one or more optical fibers 160 of the optical connector 145 are aligned with a photonic IC of the OE 150. Further discussion of the OE 150 is provided below with respect to Figures 2A-7. In some embodiments, the one or more optical fibers 160 are aligned with the photonic IC through an optical interface 155 of the OE 150. For example, the one or more optical fibers 160 may be aligned with a corresponding one or more optical waveguides formed in the photonic IC.

In some embodiments, the optical interface 155 comprises one or more free space optics components. In some embodiments, the optical interface 155 comprises an optical lens array with one or more lenses corresponding to the one or more fibers. In some embodiments, the optical interface 155 further comprises one or more mirrors that reorient the optical path(s) between the one or more optical fibers 160 and the one or more waveguides.

In some embodiments, the socket 120 further comprises one or more tilt supports 170-1, 170-2 that resist relative rotation of the frame 125 and the sidewall 135. As shown, the tilt supports 170-1, 170-2 are arranged at opposing ends of a side surface of the sidewall 135, and extend between the side surface of the sidewall 135 and a top surface of the sidewalls of the frame 125. As shown, the tilt supports 170-1, 170-2 have a slanted top surface (e.g., sloping from a top surface of the sidewall 135 to the top surface of the sidewalls of the frame 125). In some embodiments, the tilt supports 170-1, 170-2 are integrally formed with the frame 125 and the sidewall 135.

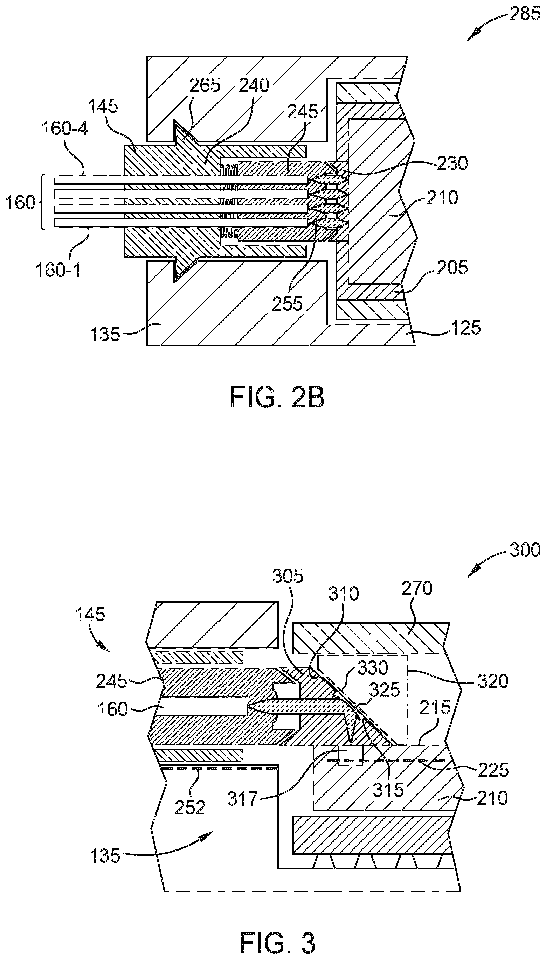

Figure 2A is a schematic cross-sectional view 200, and Figure 2B is a schematic top view 285, of an optical apparatus according to one or more embodiments. The features depicted in the cross-sectional view 200 and the top view 285 may be used in conjunction with other embodiments described herein. For example, the cross-sectional view 200 and the top view 285 may represent one implementation of an optical apparatus where the OE 150 is in a seated configuration in the socket 120 of Figure 1.

In the cross-sectional view 200, the OE 150 comprises a substrate 205 and a photonic IC (PIC) 210 disposed on, and electrically coupled with, the substrate 205. The photonic IC 210 may provide any suitable functionality through optical components and/or electronic components. The substrate 205 is disposed on, and electrically coupled with, the array of conductive connections 130, e.g., on the base of the frame 125. The array of conductive connections 130, disposed above the base of the frame 125, are electrically coupled with an array of conductive connections 275 disposed below the base of the frame 125. The array of conductive connections 275 may have any suitable implementation, e.g., LGA pins.

In some embodiments, an electronic IC 280 is disposed on, and electrically coupled with, the top surface 215. The electronic IC 280 may provide any suitable functionality through electronic components. In other embodiments, the electronic IC 280 is disposed on the substrate 205. The substrate 205, the photonic IC 210, and optionally the electronic IC 280 may be attached with each other and electrically coupled with each other using any suitable techniques.

The photonic IC 210 defines a top surface 215 and a side surface 220, and an optical reference plane 225 relative to the top surface 215. As shown, the photonic IC 210 comprises one or more optical waveguides at the optical reference plane 225, which are disposed at a predefined depth from the top surface 215. In some embodiments, the one or more optical waveguides are optically exposed through the side surface 220 of the photonic IC 210. In other embodiments, the one or more optical waveguides are optically exposed through the top surface 215 of the photonic IC 210.

In some embodiments, the OE 150 includes one or more packaging components. As shown, the OE 150 further comprises a lid 270 that attaches to the substrate 205 and that extends over the components disposed on the substrate 205. In some embodiments, the combination of the substrate 205 and the lid 270 partially encloses the photonic IC 210 and optionally the electronic IC 280. As shown, the OE 150 is open along one side (e.g., at the optical interface 155).

The OE 150 further comprises, at the optical interface 155, an optical lens array 230 comprising one or more lenses that are aligned with the optical reference plane 225. The optical lens array 230 may be formed of any suitable components, such as glass or silicon. In some embodiments, the optical lens array 230 contacts the top surface 215 and/or the side surface 220 to align the lens(es) of the optical lens array 230 with the one or more optical waveguides of the photonic IC 210. As shown, the lens(es) of the optical lens array 230 are optically coupled with the one or more optical waveguides through the side surface 220. The optical lens array 230 may be attached to the photonic IC 210 using any suitable techniques, e.g., a UV-cured epoxy.

As discussed above, an opening defining the optical receptacle 140 extends through the sidewall 135 and receives the optical connector 145 therein. The optical connector 145 comprises a connector body 240 and a ferrule 245 partially received into a recess formed in the connector body 240. The connector body 240 and the ferrule 245 may be formed of any suitable materials. For example, the connector body 240 may be formed of a same material as the sidewall 135, such as a glass-filled LCP resin material, to provide high dimensional accuracy and thermal stability. The ferrule 245 may be formed of an optically transmissive material, such as glass or silicon. The ferrule 245 is mated with one or more optical fibers 160 of the optical connector 145, which extend through the connector body 240 and partially through the ferrule 245. In some embodiments, the ferrule 245 defines one or more lenses 255 corresponding to, and aligned with, the one or more optical fibers 160. Although not immediately apparent in the cross-sectional view 200 of Figure 2A, the top view 285 of Figure 2B depicts four (4) optical fibers 160-1, ..., 160-4 are mated with the ferrule 245. The optical fibers 160-1, ..., 160-4 are arranged in a single row. The ferrule 245 defines four (4) openings to receive the optical fibers 160-1, ..., 160-4. The ferrule 245 comprises four (4) lenses 255 corresponding to four (4) lenses of the optical lens array 230.

In some embodiments, the connector body 240 defines one or more retaining features 265 that retain the optical connector 145 within the optical receptacle 140 in the connected configuration. The one or more retaining features 265 may have any suitable implementation, such as angled projections from the connector body 240 that are received into corresponding openings formed in the sidewall 135. The view 200 of 2A illustrates angled projections extending along a height dimension of the connector body 240, and the view 285 of Figure 2B illustrates angled projections extending along a width dimension of the connector body 240. The angled projections may be distinct from each other, or may be integrally formed (e.g., a single projection that circumscribes the connector body 240).

The optical receptacle 140 defines a mechanical reference plane 252 with a predefined disposition relative to the optical reference plane 225. Receiving the optical connector 145 into the optical receptacle 140 contacts the connector body 240 with the mechanical reference plane 252, which facilitates alignment of the optical fiber(s) 160 of the optical connector 145 with the photonic IC 210. In some embodiments, contacting the connector body 240 with the mechanical reference plane 252 is sufficient to align the optical fiber(s) 160 with the photonic IC 210. In other embodiments, contacting the connector body 240 with the mechanical reference plane 252 may be performed in conjunction with one or more other steps to align the optical fiber(s) with the photonic IC 210.

In some embodiments, the OE 150 and the optical connector 145 each include one or more alignment features 235, 260 that further facilitate alignment of the optical fiber(s) 160 with the photonic IC 210 during the connection or coupling process. In some embodiments, the OE 150 includes one or more coarse alignment features that facilitate a coarse alignment of the optical connector 145 with the OE 150. One example implementation of coarse alignment features is discussed below with respect with to Figure 7. In some embodiments, in addition to or alternate to the coarse alignment features, the optical connector 145, the OE 150, or both, include one or more fine alignment features that facilitate a fine alignment of the optical connector 145 with the OE 150. Specifically, in some embodiments, the ferrule 245 of the optical connector 145, the optical lens array 230 of the OE 150, or both, include fine alignment features that facilitate optical alignment of the lens 255 of the ferrule 245 relative to the lens of the optical lens array 230.

In the embodiment depicted in Figure 2A, the fine alignment features of the ferrule 245 includes a first chamfer and a second chamfer that are spaced apart from each other. As shown, the first chamfer and the second chamfer are arranged near a top portion and a bottom portion of the ferrule 245, respectively. The lens 255 is positioned between the first chamfer and the second chamfer, e.g., centrally positioned along a height dimension of the ferrule 245. In some embodiments, the lens 255 is recessed from the first chamfer and the second chamfer, such that the lens 255 is protected during the connection or coupling process.

The fine alignment features of the optical lens array 230 includes a third chamfer and a fourth chamfer that are spaced apart from each other. The first chamfer and the third chamfer have complementary shapes, and the second chamfer and the fourth chamfer have complementary shapes. As shown, the third chamfer and the fourth chamfer are arranged near a top portion and a bottom portion of the optical lens array 230, respectively. The lens(es) of the optical lens array 230 is positioned between the third chamfer and the fourth chamfer, e.g., centrally positioned along a height dimension of the optical lens array 230. In some embodiments, the lens(es) are recessed from the third chamfer and the fourth chamfer, such that the lens(es) are protected during the connection or coupling process.

During the connection or coupling process, the complementary shapes of the first chamfer and the third chamfer, and/or the complementary shapes of the second chamfer and the fourth chamfer, interface with each other such that the ferrule 245 is gradually guided into position to mate or interface with the optical lens array 230 and optically align the lens 255 with the lens(es) of the lens array 230. For example, as the ferrule 245 advances towards the optical lens array 230, the first chamfer and/or the second chamfer may slide along the corresponding third chamfer and/or fourth chamfer to adjust a height of the ferrule 245.

In some embodiments, the ferrule 245 has a fixed arrangement with the connector body 240, such that the connector body 240 moves with the ferrule 245 as the height of the ferrule 245 is adjusted. In other embodiments, and as shown in Figure 2A, the ferrule 245 is floating within the connector body 240 and allowed to move independently of the connector body 240. In some embodiments, the connector 145 comprises a spring 250 that connects the ferrule 245 to a surface in the recess of the connector body 240.

Figure 3 is a schematic cross-sectional view 300 of a portion of an alternate configuration of the optical apparatus having a deflection mirror integrated into an optical lens array, according to one or more embodiments. The features depicted in the cross-sectional view 300 may be used in conjunction with other embodiments described herein. For example, the cross-sectional view 300 may represent one implementation of an optical apparatus where the OE 150 is in a seated configuration in the socket 120 of Figure 1.

In the cross-sectional view 300, an optical lens array 305 is disposed on the photonic IC 210 and contacts the top surface 215. In some embodiments, the optical lens array 305 includes various features of the optical lens array 230, such as the lens(es), the fine alignment features (e.g., chamfers with complementary shapes to chamfers of the ferrule 245), the lens(es) being recessed from the chamfers, and so forth.

The optical lens array 305 further comprises an angled surface 310 opposite the lens(es), and a deflection mirror 315 arranged near the angled surface 310. In some embodiments, the deflection mirror 315 is integrated into the optical lens array 305. In other embodiments, the deflection mirror 315 may be externally connected to the angled surface 310.

The deflection mirror 315 redirects optical signals received from the optical fiber(s) 160 to the top surface 215 of the photonic IC 210. In some embodiments, the angle of the deflection mirror 315 is between forty (40) degrees and fifty (50) degrees from the vertical direction, such as forty-five (45) degrees. In some embodiments, the redirected optical signals are coupled into diffraction surface couplers 317 of the photonic IC 210, which are then coupled into the optical waveguides of the photonic IC 210.

In some embodiments, the lid 270 comprises a backside support 320 (e.g., a support wall) that extends down toward the photonic IC 210. The backside support 320 comprises an angled surface 325 that is complementary to the angled surface 310. In some embodiments, an adhesive material 330, such as an epoxy, is applied between the angled surfaces 310, 325 to fasten the optical lens array 305 to the backside support 320, and thereby mechanically support the optical lens array 305. In some embodiments, the angled surfaces 310, 325 may have angles between forty (40) degrees and fifty (50) degrees from the vertical direction, such as forty-five (45) degrees.

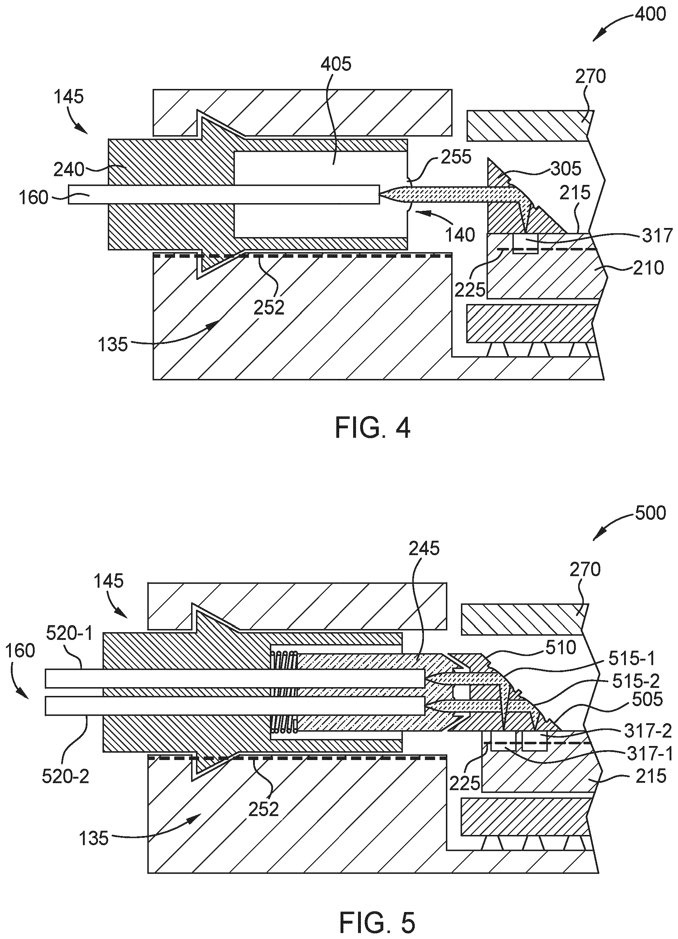

Figure 4 is a schematic cross-sectional view 400 of a portion of an alternate configuration of the optical apparatus having a fixed ferrule in an optical connector, according to one or more embodiments. The features depicted in the cross-sectional view 400 may be used in conjunction with other embodiments described herein. For example, the cross-sectional view 400 may represent one implementation of an optical apparatus where the OE 150 is in a seated configuration in the socket 120 of Figure 1.

In the cross-sectional view 400, the optical lens array 305 is disposed on the photonic IC 210 and contacts the top surface 215. In some embodiments, the optical lens array 305 includes various features of the optical lens array 230, such as the lens(es). In some embodiments, a ferrule 405 is disposed in a recess of the connector body 240, and has a fixed arrangement with the connector body 240. The ferrule 405 is mated with one or more optical fibers 160 of the optical connector 145, which extend through the connector body 240 and partially through the ferrule 245. The ferrule 405 further includes one or more lenses 255.

Receiving the optical connector 145 into the optical receptacle 140 arranges the connector body 240 with a predefined positioning relative to the mechanical reference plane 252. As the ferrule 405 has a fixed arrangement with the connector body 240, receiving the optical connector 145 into the optical receptacle 140 also positions the ferrule 245 and the one or more optical fibers 160.

In this implementation, the alignment accuracy between the mechanical reference plane 252 and the optical reference plane 225 is sufficient that the fine alignment features of the ferrule 405 and the optical lens array 305 (e.g., the complementary chamfers) may be omitted. Stated another way, in this implementation, no direct contact between the OE 150 and the optical connector 145 is required for optical alignment of the optical fiber(s) 160 with the optical waveguide(s) of the photonic IC 210. This arrangement may be particularly well-suited for implementations of the substrate 205 and the photonic IC 210 using materials with well-controlled thicknesses (such as glass, silicon, ceramic, and so forth), and using packaging technologies for the OE 150 such as hybrid bonding.

Other implementations are also contemplated. For example, the optical lens array 305 may be mechanically supported by the backside support 320 formed in the lid 270. Further, although the optical lens array 305 is shown that couples optical signal(s) through the top surface 215, alternate implementations may include the optical lens array 230 that couples optical signal(s) through the side surface 220.

Figure 5 is a schematic cross-sectional view 500 of a portion of an alternate configuration of the optical apparatus having a plurality of optical fibers arranged in a plurality of rows within a ferrule, according to one or more embodiments. The features depicted in the cross-sectional view 500 may be used in conjunction with other embodiments described herein. For example, the cross-sectional view 500 may represent one implementation of an optical apparatus where the OE 150 is in a seated configuration in the socket 120 of Figure 1.

In the cross-sectional view 500, an optical lens array 505 is disposed on a top surface 215 of the photonic IC 210. The optical lens array 505 includes various features of the optical lens array 305, such as the lens(es). The optical lens array 505 further comprises an angled surface 510 opposite the lens(es), and two (2) deflection mirrors 515-1, 515-2 arranged near the angled surface 510. In some embodiments, the deflection mirrors 515-1, 515-2 are integrated into the optical lens array 505. In other embodiments, the deflection mirrors 515-1, 515-2 may be externally connected to the angled surface 510.

The deflection mirrors 515-1, 515-2 each redirect optical signals received from the optical fiber(s) 160 to the top surface 215 of the photonic IC 210. In some embodiments, the angle of the deflection mirrors 515-1, 515-2 is between forty (40) degrees and fifty (50) degrees from the vertical direction, such as forty-five (45) degrees. In some embodiments, the redirected optical signals are coupled into diffraction surface couplers 317-1, 317-2 of the photonic IC 210, which are then coupled into the optical waveguides of the photonic IC 210.

In some embodiments, the one or more optical fibers 160 comprise a plurality of optical fibers arranged in a plurality of rows within the ferrule 245. As shown, the ferrule 245 defines two (2) rows 520-1, 520-2 of openings that receive respective ones of the optical fibers 160. The optical signals received from the optical fiber(s) 160 of the upper row 520-1 are redirected by the deflection mirror 515-1 into a first set of diffraction surface couplers 317-1, and the optical signals received from the optical fiber(s) 160 of the lower row 520-2 are redirected by the deflection mirror 515-2 into a second set of diffraction surface couplers 317-2.

As shown, the optical connector 145 includes the floating ferrule 245 and complementary fine alignment features with the optical lens array 505. However, other implementations are also contemplated. For example, the optical lens array 505 may be mechanically supported by the backside support 320 formed in the lid 270. In another example, the floating ferrule 245 may be substituted for a fixed ferrule 405 and the complementary fine alignment features may be omitted. In yet another example, although the optical lens array 505 is shown that couples optical signal(s) through the top surface 215, alternate implementations may include an adaptation of the optical lens array 230 to include multiple rows of lenses to couple optical signal(s) through the side surface 220.

Figure 6 is a schematic top view 600 of a portion of an alternate configuration of the optical apparatus having a plurality of optical receptacles, according to one or more embodiments. The features depicted in the top view 600 may be used in conjunction with other embodiments described herein. For example, the top view 600 may represent one implementation of an optical apparatus where the OE 150 is in a seated configuration in the socket 120 of Figure 1.

In the top view 600, the sidewall 135 of the socket 120 has a plurality of optical receptacles 140-1, 140-2 extending therethrough. Each optical receptacle 140-1, 140-2 receives a respective optical connector 145-1, 145-2, and each optical connector 145-1, 145-2 carries a respective set of optical fibers 605-1, 605-2 in respective ferrules 245-1, 245-2. The OE 150 comprises a plurality of optical lens arrays 230-1, 230-2, each aligned with a respective set of optical fibers 605-1, 605-2, to couple optical signals between the optical connectors 145-1, 145-2 and the photonic IC 210.

As shown, the optical connectors 145-1, 145-2 include floating ferrules 245-1, 245-2 and complementary fine alignment features with the optical lens arrays 230-1, 230-2. However, other implementations are also contemplated. For example, the optical lens arrays 230-1, 230-2 may be mechanically supported by one or more backside supports 320 formed in the lid 270. In another example, the optical fibers 160 may be arranged in a plurality of rows within the ferrules 245-1, 245-2. In yet another example, the floating ferrules 245-1, 245-2 may be substituted for fixed ferrules 405 and the complementary fine alignment features may be omitted. In yet another example, although the optical lens arrays 230-1, 230-2 are shown that couple optical signal(s) through the side surface 220, alternate implementations may include the optical lens array 305, 505 that couple optical signals into the top surface 215.

The various optical fibers 160 of the sets of optical fibers 605-1, 605-2 may be operated in any suitable manner. In some embodiments, the sets of optical fibers 605-1, 605-2 carry bidirectional optical signals to and from the photonic IC 210. In other embodiments, one of the optical connectors 145-1, 145-2 may be designated for unidirectional transmission of optical signals to the photonic IC 210, and the other of the optical connectors 145-1, 145-2 may be designated for unidirectional reception of optical signals from the photonic IC 210. Other configurations are also contemplated.

The optical lens arrays 230-1, 230-2 are depicted as separate components disposed along one side of the photonic IC 210. In some alternate embodiments, the optical lens arrays 230-1, 230-2 may formed as a single, elongated component along the one side. In some alternate embodiments, the optical lens arrays 230-1, 230-2 may be formed along different sides of the photonic IC 210.

Figure 7 is a schematic cross-sectional view 700 of an optical engine (OE) having coarse alignment features and fine alignment features for aligning an optical connector with a photonic IC of the OE, according to one or more embodiments. The features depicted in the cross-sectional view 700 may be used in conjunction with other embodiments described herein. For example, the cross-sectional view 700 may represent one implementation of an optical apparatus where the OE 150 is in a seated configuration in the socket 120 of Figure 1.

In the cross-sectional view 700, the OE 150 comprises coarse alignment features 705-1, 705-2. In some embodiments, the coarse alignment feature 705-1 comprises a chamfer of the lid 270, and the coarse alignment feature 705-2 comprises a chamfer of the substrate 205. In some alternate embodiments, the OE 150 may include only one of the coarse alignment features 705-1, 705-2 (e.g., a chamfer of the lid 270 or of the substrate 205).

Thus, the OE 150 has opposing top and bottom coarse alignment features 705-1, 705-2 that gradually guide the ferrule 245 along the height direction toward the optical lens array 230. In this way, the optical fibers 160 mated with the ferrule 245 are guided by the coarse alignment features 705-1, 705-2 toward optical alignment with the photonic IC 210 during a connection or coupling process. Although not shown in the cross-sectional view 700, the OE 150 and/or the optical lens array 230 may additionally or alternately include sidewall chamfers that gradually guide the ferrule 245 along the width direction.

The optical lens array 230 is attached to the side surface 220 of the photonic IC 210, and comprises fine alignment features 710-1, 710-2 (shown as chamfers of the optical lens array 230). Thus, during the connection or coupling process, the fine alignment features of the ferrule 245 (e.g., complementary angle chamfers) may first contact one or both of the coarse alignment features 705-1, 705-2, guiding the ferrule 245 into a range where the fine alignment features of the ferrule 245 may then contact one or both of the fine alignment features 710-1, 710-2 to optically align the optical lens(es) 255 with the optical lens array 230.

In some embodiments, the lid 270 comprises a support wall 715 that extends down toward the photonic IC 210. The support wall 715 is substantially parallel to a surface of the optical lens array 230 opposite the lenses. In some embodiments, an adhesive material 720, such as an epoxy, is applied between the optical lens array 230 and the support wall 715 to fasten the optical lens array 230 to the support wall 715, and thereby mechanically support the optical lens array 230.

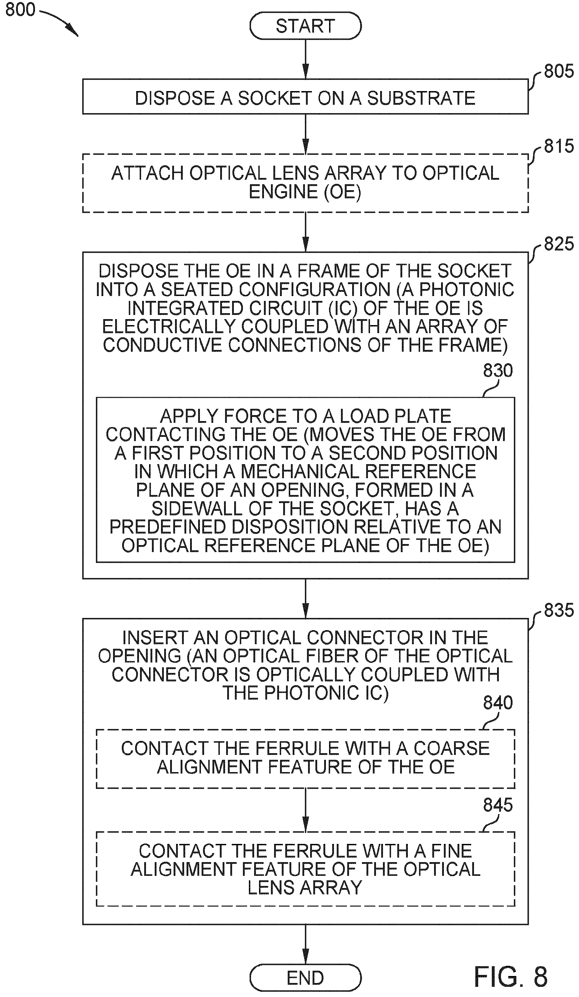

Figure 8 is a flow diagram for a method 800 of fabricating an optical apparatus, according to one or more embodiments. The method 800 may be used in conjunction with other embodiments, such as fabricating any of the optical apparatus discussed above with respect to Figures 1-7.

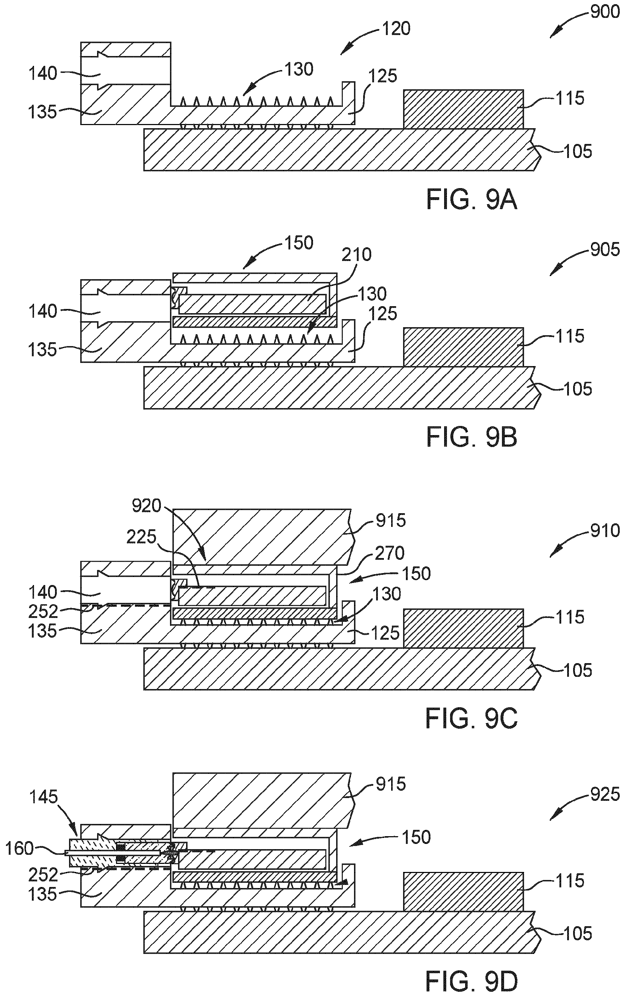

The method 800 begins at block 805, where a socket is disposed on a substrate. Diagram 900 of Figure 9A illustrates the block 805. In some embodiments, disposing the socket 120 on the substrate 105 comprises contacting a frame 125 of the socket 120 to a top surface of the substrate 105. Disposing the socket 120 on the substrate 105 may further comprise electrically connecting an array of conduction connections of the socket 120 with an array of conduction connections of the substrate. In some embodiments, the socket 120 further comprises a sidewall 135 that extends down relative to the top surface to form a stop, and disposing the socket 120 on the substrate 105 comprises contacting the stop against a sidewall of the substrate 105.

At block 815, an optical lens array is attached to an optical engine. In some embodiments, attaching the optical lens array comprises optically aligning one or more lenses of the optical lens array with a corresponding one or more optical waveguides of the optical engine. In some embodiments, optically aligning the one or more lenses comprises performing an active optical alignment process using a tool temporarily attached to the optical engine.

At block 825, the optical engine 150 is disposed in a frame 125 of the socket 120 into a seated configuration, in which a photonic IC 210 of the optical engine is electrically coupled with an array of conductive connections 130 of the frame 125. Diagram 905 of Figure 9B illustrates a start condition of the block 825, where the photonic IC is positioned above the frame 125. At block 830, in some embodiments, and referencing diagram 910 of Figure 9C, disposing the optical engine 150 in the frame 125 comprises applying a force to a load plate 915 contacting the optical engine 150 (e.g., a top surface 920 of the optical engine 150), which moves the optical engine 150 from a first position to a second position in which a mechanical reference plane 252 of an opening (e.g., the optical receptacle 140), formed in a sidewall 135 of the socket 120, has a predefined disposition relative to an optical reference plane 225 of the optical engine 150.

At block 835, an optical connector 145 is inserted in the opening (e.g., the optical receptacle 140). When in the connected configuration, an optical fiber 160 of the optical connector 145 is optically coupled with the photonic IC 210. Diagram 925 of Figure 9D illustrates the block 835. In some embodiments, the connector body of the optical connector 145 comprises one or more retaining features that retains the optical connector in the connected configuration.

In some embodiments, inserting the optical connector 145 in the opening comprises, at an optional block 840, contacting the ferrule 245 of the optical connector 145 with a coarse alignment feature of the optical engine (e.g., chamfers formed in the lid and the substrate of the optical engine). In some embodiments, inserting the optical connector 145 in the opening comprises, at an optional block 845, contacting the ferrule 245 with a fine alignment feature of the optical lens array 230. The method 800 ends following completion of block 835.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

## Claims

1. An apparatus comprising:
a socket comprising:
an array of conductive connections;
a frame at least partly circumscribing the array of conductive connections; and
a sidewall having an optical receptacle extending therethrough, wherein the optical receptacle is configured to receive an optical connector; and
an optical engine received in the frame into a seated configuration where a photonic integrated circuit of the optical engine is electrically coupled with the array of conductive connections, and is optically coupled with one or more optical fibers of the optical connector.

2. The apparatus of claim 1, wherein the optical engine further comprises:
a substrate on which the socket is disposed, wherein the array of conductive connections are electrically coupled with conductive connections of the substrate.

3. The apparatus of claim 1 or 2,
wherein the optical engine further comprises an optical lens array having a first lens that is optically aligned with a waveguide of the photonic integrated circuit, and
wherein the optical connector comprises a second lens that is optically aligned with the first lens and with a first optical fiber of the one or more optical fibers.

4. The apparatus of claim 3, wherein the optical engine further comprises a lid that defines a backside support for the optical lens array.

5. The apparatus of claim 3 or 4, wherein the optical connector further comprises:
a connector body; and
a ferrule partially received into a recess formed in the connector body, and mated with the one or more optical fibers, wherein the second lens is defined in the ferrule.

6. The apparatus of claim 5, wherein one or more of:
A) the ferrule is floating within the connector body;
B) the one or more optical fibers comprise a plurality of optical fibers arranged in a plurality of rows within the ferrule.

7. The apparatus of claim 5 or 6,
wherein the optical engine further comprises a lid and a substrate disposed on the socket, and
wherein one or both of the lid and the substrate includes a coarse alignment feature to facilitate alignment of the ferrule relative to the optical lens array.

8. The apparatus of any of claims 5 to 7, wherein one or both of the optical lens array and the ferrule includes a fine alignment feature to facilitate alignment of the first lens with the second lens,
optionally where the optical lens array and the ferrule comprise complementary chamfered edges as the fine alignment feature.

9. The apparatus of any preceding claim,
wherein the sidewall has a plurality of optical receptacles extending therethrough, and
wherein the photonic integrated circuit in the seated configuration is optically coupled with optical fibers of a plurality of optical connectors.

10. A socket for an optical engine, the socket comprising:
an array of conductive connections;
a frame portion at least partly circumscribing the array of conductive connections, the frame portion configured to receive the optical engine into a seated configuration in which an photonic integrated circuit of the optical engine is electrically coupled with the array of conductive connections; and
a wall portion extending in a first direction from the frame portion, the wall portion having an opening extending therethrough, the opening defining a mechanical reference plane with a predefined disposition relative to an optical reference plane of the optical engine, such that receiving an optical connector into the opening aligns an optical fiber of the optical connector with the photonic integrated circuit.

11. The socket of claim 10, wherein one or more of:
A) the frame portion and the wall portion are integrally formed of a glass-filled liquid crystal polymer resin material;
B) the wall portion extends in a second direction opposite the first direction to form a stop for a side surface of a substrate on which the frame portion is disposed;
C) the socket further comprises
one or more tilt supports configured to resist relative rotation of the wall portion and the frame portion.

12. A method of fabricating an optical apparatus, the method comprising:
disposing a socket on a substrate;
disposing an optical engine in a frame of the socket into a seated configuration where an photonic integrated circuit of the optical engine is electrically coupled with an array of conductive connections of the socket; and
inserting an optical connector in an opening formed in a sidewall of the socket, wherein an optical fiber of the optical connector is optically coupled with the photonic integrated circuit.

13. The method of claim 12, wherein disposing the optical engine in the frame of the socket into a seated configuration comprises:
applying force to a load plate contacting the optical engine, wherein the force applied to the load plate moves the optical engine from a first position to a second position in which a mechanical reference plane of the opening has a predefined disposition relative to an optical reference plane of the optical engine.

14. The method of claim 12 or 13,
wherein the opening is formed through a first portion of the sidewall that extends in a first direction from the frame,
wherein a second portion of the sidewall extends in a second direction opposite the first direction, the second portion forming a stop, and
wherein disposing the socket on the substrate comprises contacting the stop with a side surface of the substrate.

15. The method of any of claims 12 to 14,
wherein the optical engine further comprises:
an optical lens array having a first lens that is optically aligned with a waveguide of the photonic integrated circuit;
a lid; and
a second substrate disposed on the socket,
wherein the optical connector further comprises:
a ferrule mated with the optical fiber; and
a second lens, defined in the ferrule, that is optically aligned with the first lens and with the optical fiber,
wherein inserting the optical connector in the opening comprises contacting the ferrule with a coarse alignment feature of the lid or the second substrate,
optionally wherein inserting the optical connector in the opening comprises contacting the ferrule with a fine alignment feature of the optical lens array.
